# EUROPÄISCHE PATENTANMELDUNG

(11) **EP 2 565 538 A1**
(43) Veröffentlichungstag der Anmeldung: **06.03.2013**
(21) Anmeldenummer: 11179513.4
(22) Anmeldetag: 31.08.2011
(51) Int. Cl.: F22G 5/12, F02C 3/30, F02C 7/143, F01D 25/12, F02C 7/16

(54) **Umleitdampfleitung**

(71) Anmelder: SIEMENS AKTIENGESELLSCHAFT, 80333 München (DE)
(72) Erfinder: Berenbrink, Peter, 44807 Bochum (DE); Deidewig, Frank, 45149 Essen (DE); Gedanitz, Holger, 44801 Bochum (DE); Huckriede, Dirk, 41352 Korschenbroich (DE); Koebe, Mario, 45478 Mülheim an der Ruhr (DE); Prade, Bernd, 45479 Mülheim (DE); Rauh, Horst Uwe, 45309 Essen (DE); Schestag, Stephan, 46149 Oberhausen (DE)

(57) **Zusammenfassung**

Die Erfindung betrifft eine Vermischeinheit (1) zum Vermischen von Wasser mit Dampf in einer Umleitstation, wobei in der Vermischeinheit (1) mehrere Lavaldüsen (5, 5a, 5b, ...) angeordnet sind, die in einer Wasserdampfrichtung axial zueinander verschoben sind, so dass die Geräuschemission insgesamt verringert ist.

## Beschreibung

Die Erfindung betrifft eine Vermischeinheit zum Vermischen eines Strömungsmediums mit einem Kühlungsmedium, umfassend einen Rohrkanalabschnitt, an den ein Vermischabschnitt strömungstechnisch angekoppelt ist, wobei der Vermischabschnitt mehrere Lavaldüsen umfasst, durch die das Strömungsmedium strömbar ist, wobei in den Lavaldüsen Einspritzkanäle ausgebildet sind, durch die das Kühlungsmedium derart strömt, dass eine Vermischung des Strömungsmedium mit dem Kühlungsmedium stattfindet.

In Dampfkraftwerken wird in einem Dampferzeuger Dampf erzeugt, der in einem strömungstechnisch mit dem Dampferzeuger angekoppelten Turbosatz die thermische Energie des Dampfes in Rotationsenergie umwandelt. Die Rotationsenergie wird schließlich in elektrische Energie umgewandelt. Solange das Dampfkraftwerk im Dauerbetrieb läuft und die Last am elektrischen Generator vergleichsweise konstant ist, sind die thermodynamischen Verhältnisse vergleichsweise zeitlich konstant.

Es gibt allerdings Situationen, in denen das Dampfkraftwerk an schnell ändernde Lastsituationen angepasst werden muss. Beispielsweise kann es sein, dass ein Störfall auftritt und der Generator plötzlich vom Netz getrennt werden muss. Es kann auch vorkommen, dass das Dampfkraftwerk unvorhergesehen von Volllast auf Teillast umschalten muss. Solche Laständerungen sind eine Herausforderung an die Regelungstechnik des gesamten Dampfkraftwerkes. Eine Möglichkeit, schnell ändernden Laständerungen zu folgen oder zu begegnen ist, dass der vom Dampferzeuger erzeugte Dampf, der im Dauerbetrieb bzw. Volllastbetrieb direkt zur Hochdruck-Teilturbine strömt, über eine Umleitstation direkt zum Kondensator geführt wird. In dieser Umleitstation sind Vorrichtungen vorgesehen, die den hocherhitzten Dampf mit Wasser vermischen, um somit die thermodynamischen Verhältnisse des Dampfes zu ändern. Dieses Wasser wird in den Dampf eingespritzt. Dies erfolgt gemäß dem Stand der Technik in einer Umleitstation, in der eine Lavaldüse angeordnet ist, die Einspritzkanäle aufweist, durch die Wasser in den Dampf gespritzt wird.

Allerdings hat es sich gezeigt, dass dadurch die Geräuschemission vergleichsweise stark ist. Des Weiteren hat es sich gezeigt, dass die Temperaturverteilung nicht homogen genug ist, was zu einem nicht optimalen Betriebsverhalten in Teillast führt.

Im Wesentlichen bestehen heute eingesetzte Umleitstationen aus einem Umleitventil und der Umleitdampfeinführung. Die Umleitdampfeinführung umfasst eine Blende, eine Wassereinspritzungsvorrichtung und ein Mischrohr. Beim Anfahren der Dampfkraftwerksanlage oder nach einem Trip wird der Dampfturbinen anfallende Dampf über die Umleitstation durch Einspritzen von Wasser abgekühlt und direkt in den Kondensator eingeleitet.

Es ist Aufgabe der Erfindung, eine bessere Vermischung des Wassers mit dem Dampf während des Betriebs zu ermöglichen und gleichzeitig eine Geräuschemission zu reduzieren.

Gelöst wird diese Aufgabe durch eine Vermischeinheit zum Vermischen eines Strömungsmediums mit einem Kühlungsmedium, umfassend einen Rohrkanalabschnitt, an den ein Vermischabschnitt strömungstechnisch angekoppelt ist, wobei der Vermischabschnitt mehrere Lavaldüsen umfasst, durch die das Strömungsmedium strömbar ist, wobei in den Lavaldüsen Einspritzkanäle ausgebildet sind, durch die das Kühlungsmedium derart strömt, dass eine Vermischung des Strömungsmediums mit dem Kühlungsmedium stattfindet, wobei zueinander benachbarte Lavaldüsen in Strömungsrichtung des Strömungsmediums versetzt zueinander angeordnet sind.

In den Unteransprüchen sind vorteilhafte Weiterbildungen angegeben.

Mit der Erfindung wird somit der Weg eingeschlagen, entgegen dem bestehenden Konzept, bei dem der Dampf nur durch eine einzige Blendenöffnung strömt, mehrere Blendenöffnungen zu verwenden. Der Nachteil der durch die Verwendung einer einzelnen Blendenöffnung entsteht, ist der, dass die Vermischung insbesondere an den Rändern des Vermischabschnitts nicht optimal ist. Durch die Verwendung mehrerer Blendenöffnungen werden eine bessere Vermischung und eine reduzierte Geräuschemission erreicht.

Ein wesentlicher Gedanke der Erfindung ist es, dass zwei zueinander benachbarte Lavaldüsen in Strömungsrichtung versetzt zueinander angeordnet sind. Zur Kühlung des Dampfes wird im Umleitbetrieb Wasser in die Umleitdampfleitung eingespritzt. Um eine gute Zerstäubung des Wassers und somit eine effektive Kühlung zu erzielen, wird der Dampf vor der Zumischung durch eine Lavaldüse oder durch eine Lochblende geführt, wodurch sich die Strömungsgeschwindigkeit stark erhöht. Die hohe Relativgeschwindigkeit zwischen Dampf und Wassertropfen führt zwar zu einer guten Zerstäubung, hat aber den Nachteil, dass die Wassertropfen nicht bis in den Kern des Dampfstroms gelangen und somit der innere Teil bzw. der innere Kern des Dampfstroms nicht ausreichend gekühlt wird. Die Lavaldüsen werden nunmehr in der Strömungsrichtung des Strömungsmediums axial verschoben. Bei der Durchströmung durch eine Lavaldüse wird eine Schallwelle erzeugt. Die Schallwelle entsteht hinter einer Lavaldüse. Wenn die Lavaldüse zusätzlich um eine Länge axial gegeneinander verschoben wird, so dass sich Schallwellenberge und Schallwellentäler von verschiedenen und zueinander benachbarten Lavaldüsen gegenseitig aufheben, wird die Gesamtschallemission deutlich reduziert.

Somit ist ein wesentliches Merkmal hier, dass die einzelnen Lavaldüsen, die benachbart zueinander angeordnet sind, axial gegenseitig verschoben sind.

In einer ersten vorteilhaften Weiterbildung werden die Lavaldüsen identisch zueinander ausgeführt. Dies führt zu einer besseren Berechenbarkeit der Schallwellentäler und Schallwellenberge und es kann so durch die Schallemission durch Berechnungen vorher besser bestimmt werden, in wie weit die axiale Verschiebung erfolgen muss.

In einer weiteren vorteilhaften Weiterbildung sind die Lavaldüsen mit einer Verschiebeeinrichtung gekoppelt, wobei ein Verschieben der Lavaldüsen während des Betriebs möglich ist. Somit wird vorgeschlagen, eine aktive Verschiebung auszubilden, die elektrisch oder hydraulisch oder mit anderen Mitteln erfolgen kann, damit die Lavaldüsenebenen derart zueinander verschiebbar sind, dass während des Betriebs unterschiedliche Frequenzbänder beeinflusst werden können. Somit kann bei unterschiedlichen Betriebszuständen eine Geräuschemission wirksam reduziert werden.

Die Erfindung wird anhand eines Ausführungsbeispiels nun näher erläutert. Es zeigen:
- Figur 1: eine Querschnittsansicht einer herkömmlichen Vermischeinheit;
- Figur 2: eine Querschnittsansicht einer erfindungsgemäßen Vermischeinheit;
- Figur 3: eine Querschnittsansicht eines Teils der Vermischeinheit.

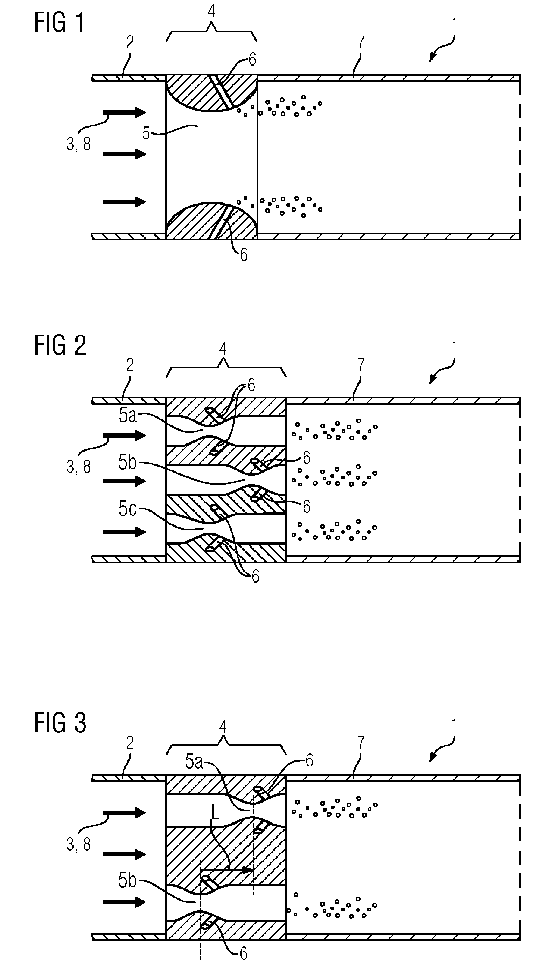

Figur 1 zeigt eine Vermischeinheit 1 gemäß dem Stand der Technik. Solch eine Vermischeinheit 1 ist durch einen Rohrkanalabschnitt 2 gekennzeichnet, in dem ein Strömungsmedium 3 in Richtung eines Vermischabschnitts 4 strömt. In diesem Vermischabschnitt 4 ist eine Lavaldüse 5 angeordnet, in der das Strömungsmedium beschleunigt wird. In der Lavaldüse 5 sind Einspritzkanäle 6 angeordnet, durch die ein Kühlungsmedium wie Wasser strömt. Das Kühlungsmedium wird mit dem Strömungsmedium 3 in einem Rohrabschnitt 7, der strömungstechnisch an der Vermischeinheit 4 verbunden ist, vermischt.

Figur 2 zeigt eine erfindungsgemäße Darstellung der Vermischeinheit 1. Der Unterschied zur Vermischeinheit 1 gemäß Figur 1 ist, dass im Vermischabschnitt 4 mehrere Lavaldüsen 5a, 5b, 5c angeordnet sind, durch die das Strömungsmedium 3 strömt und in denen jeweils ein Einspritzkanal 6 ausgebildet ist, durch den Wasser mit dem Strömungsmedium vermischt wird. Des Weiteren besteht der Unterschied zwischen der Vermischeinheit 1 zwischen Figur 1 und Figur 2 darin, dass die Lavaldüsen 5a, 5b, 5c in der Strömungsmediumrichtung 8, die auch als axiale Richtung bezeichnet werden kann, zueinander verschoben sind. Durch diese Verschiebung werden die Schallwellentäler, die mit Schallwellenbergen von den benachbarten Lavaldüsen zusammenfallen, aufgehoben. Dadurch wird eine Gesamtschallemissionsreduzierung erreicht. Der Rohrabschnitt 7 ist schließlich mit einem nicht näher dargestellten Kondensator verbunden.

Die axiale Verschiebung der Lavaldüsen 5a, 5b, 5c gegeneinander kann durch eine aktive Verschiebung mittels elektrischer oder hydraulischer Kräfte erfolgen. Dies kann während des Betriebs erfolgen, wo unterschiedliche Betriebszustände auftauchen. Dadurch können unterschiedliche Frequenzbänder beeinflusst werden, was die Geräuschemission insgesamt auch während des Betriebes reduziert.

Man kann das Frequenzband im Betrieb messen und dann die Blenden so gegeneinander verschieben, dass die Geräuschemission minimal wird. Man kann vorab bei der Inbetriebnahme der Anlage für jeden Lastpunkt die günstigsten axialen Positionen ermitteln und diese dann im Betrieb allein einfahren, ohne aktiv das Frequenzspektrum messen zu müssen.

Figur 3 zeigt eine Darstellung der Verschiebung der Lavaldüsen 5a und 5b exemplarisch. Die Lavaldüse 5a ist gegenüber der Lavaldüse 5b um die Länge L zueinander verschoben. Bei einer Schallfrequenz von 1000Hz würde dies eine Schallgeschwindigkeit von ca. 500 m/s ergeben, wodurch sich eine erforderliche Länge von 0,5 m ergibt. Diese Länge kann in erster Näherung statisch eingestellt werden oder, wie weiter oben beschrieben, auch während des Betriebes durch eine aktive Verschiebung erfolgen.

## Patentansprüche

1. Vermischeinheit (1) zum Vermischen eines Strömungsmediums (3) mit einem Kühlmedium,
umfassend einen Rohrkanalabschnitt(2), am den ein Vermischabschnitt (4) strömungstechnisch angekoppelt ist,
wobei der Vermischabschnitt (4) mehrere Lavaldüsen (5, 5a, 5b, ...) umfasst, durch die das Strömungsmedium (3) strömbar ist,
wobei in den Lavaldüsen (5, 5a, 5b, ...) Einspritzkanäle (6) ausgebildet sind, durch die das Kühlmedium derart strömt, dass eine Vermischung des Strömungsmediums (3) mit dem Kühlmedium stattfindet,
wobei zueinander benachbarte Lavaldüsen (5, 5a, 5b, ...) in Strömungsrichtung (8) des Strömungsmediums (3) versetzt zueinander angeordnet sind.

2. Vermischeinheit (1) nach Anspruch 1,
wobei die Lavaldüsen (5, 5a, 5b, ...) identisch zueinander ausgeführt sind.

3. Vermischeinheit (1) nach Anspruch 1 oder 2,
wobei die Einspritzkanäle (6) schräg zur Lavaldüsenwand ausgebildet sind.

4. Vermischeinheit (1) nach einem der vorhergehenden Ansprüche,
wobei das Strömungsmedium (3) Dampf ist.

5. Vermischeinheit (1) nach einem der vorhergehenden Ansprüche,
wobei das Kühlmedium Wasser ist.

6. Vermischeinheit (1) nach einem der vorhergehenden Ansprüche,
wobei die Lavaldüsen (5, 5a, 5b, ...) mit einer Verschiebeeinrichtung gekoppelt sind,
wobei ein Verschieben der Lavaldüsen (5, 5a, 5b, ...) während des Betriebs möglich ist.

7. Vermischeinheit (1) nach Anspruch 6,
wobei die Verschiebung mittels elektrischer oder hydraulischer Mittel erfolgt.
